# EUROPEAN PATENT SPECIFICATION

(11) **EP 2 732 791 B1**
(45) Date of publication and mention of the grant of the patent: **06.03.2019**
(21) Application number: 11869457.9
(22) Date of filing: 11.07.2011
(51) Int. Cl.: A61C 8/00, A61C 13/263

(54) **ANGULAR FRICTION JOINT TYPE OF DENTAL IMPLANT**
ZAHNIMPLANTAT MIT EINER WINKELREIBVERBINDUNG
IMPLANT DENTAIRE DE TYPE À JONCTION PAR FROTTEMENT ANGULAIRE

(43) Date of publication of application: 21.05.2014
(73) Proprietor: Neobiotech Co., Ltd., Seoul 152-789 (KR)
(72) Inventor: CHO, Mee-Ho, 138-829 Seoul (KR)
(74) Representative: Arth, Hans-Lothar
(86) International application number: PCT/KR2011/005067
(87) International publication number: WO 2013/008962

(56) References cited:
- EP-A2- 1 462 066
- WO-A1-2008/129512
- JP-A- 10 108 871
- KR-A- 20100 012 966
- KR-A- 20120 003 628
- KR-Y1- 200 320 673
- KR-Y1- 200 382 442
- TW-B- I 291 869
- US-A- 5 727 942
- US-A- 5 863 200

## Description

### Technical Field

The present invention relates to a dental implant, and more particularly, to a frictional angled dental implant enabling to vertically mount prostheses on an alveolar bone even the implant is planted at a slant to the alveolar bones.

### Background Art

A dental implant is for making new artificial teeth instead of natural teeth having bone loss, and it is preferable that the new artificial teeth should be vertically installed to the gum or the alveolar bone as like natural teeth such that they can endure well the bite force raised by the masticatory movement. However, reversely to this hope, the case in which a dental implant can be not vertically planted to the alveolar bones is often occurred because of the bad condition of the patient's alveolar bone, and this case even one portion of the implant should be angled to succeed the implant surgery.

One representative example of the dental implant having the angled structure is disclosed to the USP 5,863,200 "ANGLED DENTAL IMPLANT", and its represent structure is shown in FIG. 1.

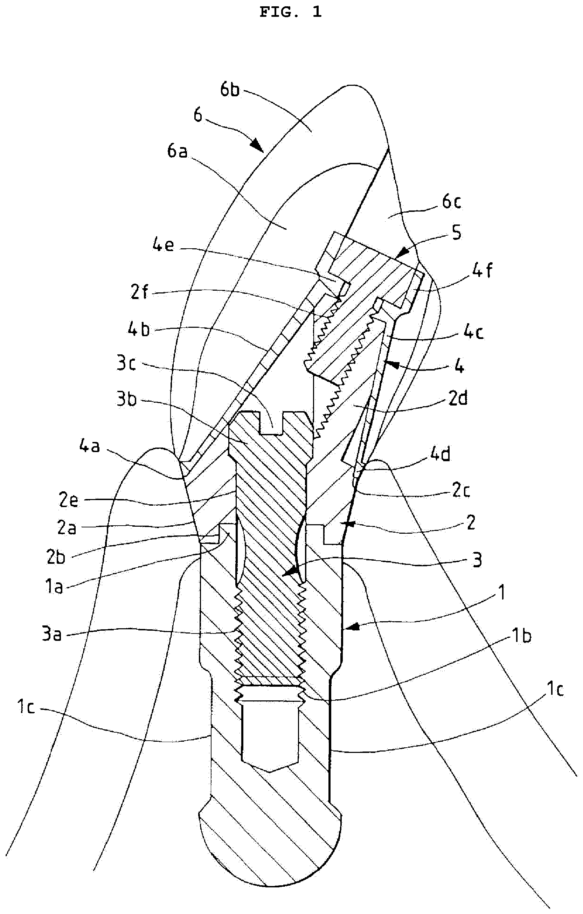

FIG. 1 is a sectional view illustrating a state in which the angled abutment is mounted on the fixture planted on the alveolar bone in the conventional art.

As shown in FIG. 1, the conventional angled dental implant is composed of the fixture 1, the abutment 2, the abutment screw 3, the cylinder 4 and the screw 5.

The fixture 1 is planted to the alveolar bone, and the connecting portion 1c is fully planted in the alveolar bone, and the angled frictional tube portion 1a is slightly protruded up the alveolar bone.

The abutment 2 is mounted on the upper end of the fixture 1 at a slant such that the central axis thereof have a predetermined angle, and it is fixedly connected to the fixture 1 by the abutment screw 3. At this time, the bolt hole 2e formed in the abutment 2 and the female screw 1b formed on the fixture 1 lie on the coaxial line.

The cylinder 4 is fixedly connected to the abutment 2 by the screw 5. The cylinder 4 is inserted with the dental prostheses 6. At this time, the screw 4 passes the upper end portion 4f of the cylinder 4 through the hole 6c formed in the abutment 2 and then it is fastened to the female 2f formed on the abutment 2. At this time, the female screw 2f formed on the abutment 2 and the female screw 1b formed on the fixture 1 do not lie on the coaxial line, and the hole 6c formed in the dental prostheses 6 is fill with a proper material like dental cement after the cylinder 4 having the dental prostheses 6 is fixedly connected to the abutment 2.

The conventional angled dental implant having the above described structure is required with the abutment screw 3 to connect the abutment to the fixture 1, and the screw 5 is also required to connect the cylinder 4 having the dental prostheses 6 to the abutment 2, and therefore the number of parts is many and the time and labor to process the parts is increased.

To successfully plant the dental implant, the works to plant the fixture 1 to the alveolar bone, to fixedly connect the abutment 2 to the fixture 1 using the abutment screw 3, to fixedly connect the cylinder 4 having the dental prostheses 6 to the abutment 2 using the screw 5, and finally to fill the hole 6c with the cement should be done in order, and therefore each work should be carefully done and the working time is also greatly increased.

Also, the fixture 1 should be formed with the female screw 1a which is fastened with the abutment screw 3 to connect the fixture 1 and the abutment 2, and therefore the diameter of the fixture 1 is limited to be decreased, and then the fixture 1 is limited to be planted to narrow alveolar bone.

Furthermore, a fine gap present in the connection portion between the fixture 1 and the abutment 2 is near the alveolar bone, and therefore the alveolar bone is absorbed in the fine gap and then bone loss is raised.

### Disclosure of Invention

### Technical Goals

The present invention is created to solve the above mentioned conventional problem, and one goal of the present invention is to provide a frictional angled dental implant enabling to greatly decrease the number of pats, the time to process the parts, and the labors to work, by making an abutment connecting portion to be angled and directly mounting an abutment on the abutment connecting portion using frictional force.

Further, another goal of the present invention is to provide a frictional angled dental implant enabling to greatly decrease the working time and labor required with special attention by planting a planted portion in an alveolar bone and by mounting a dental prostheses on the abutment with cement after connecting an abutment to an abutment connecting portion, or by connecting an abutment to an abutment connecting portion after mounting a dental prostheses on the abutment with cement.

Further, another goal of the present invention is to provide a frictional angled dental implant enabling to be planted in a narrow alveolar bone by connecting an abutment to an abutment connecting portion with friction force without forming a screw hole in a planted portion such that the diameter of the planted portion is sufficiently decreased.

Further, still another goal of the present invention is to provide a frictional angled dental implant enabling to prevent that an alveolar bone is absorbed in the fine gap present between an abutment connecting portion and an abutment by placing the abutment connecting portion over the alveolar bone.

### Technical solutions

To accomplish the aim of the present invention, the present invention provides a frictional angled dental implant according to the appended claims.

### Effect of the Invention

According to the present invention, the number of pats, the time to process the parts, and the labors to work may be greatly decrease since the abutment connecting portion is formed to be angled and the abutment is directly mounted on the abutment connecting portion using frictional force.

Further, the working time and labor required with special attention may be greatly decreased since the planted portion is planted in an alveolar bone and then the dental prostheses is mounted on the abutment with cement after connecting an abutment to an abutment connecting portion, or the abutment is connected to an abutment connecting portion after mounting a dental prostheses on the abutment with cement.

Further, the frictional angled dental implant of the present invention may be planted in a narrow alveolar bone since the abutment is connected to the abutment connecting portion with friction force without forming a screw hole in a planted portion such that the diameter of the planted portion is sufficiently decreased.

Further, it may be prevented that the alveolar bone is absorbed in the fine gap present between an abutment connecting portion and an abutment since the abutment connecting portion is placed over the alveolar bone.

### Brief Description of Drawings

FIG. 1 is a sectional view illustrating a state in which the angled abutment is mounted on the fixture planted on the alveolar bone in the conventional art;
FIG. 2 is a sectional view illustrating disassembly the frictional angled dental implant according to the first preferred embodiment of the present invention;
FIG. 2A is a sectional view illustrating disassembly the frictional angled dental implant according to variant the implant in FIG. 2;
FIG. 3 is a sectional view illustrating the state that the implant in FIG. 2 is planted;
FIG. 4 is a sectional view illustrating disassembly the frictional angled dental implant according to the second preferred embodiment of the present invention;
FIG. 5 is a sectional view illustrating the state that the implant in FIG. 4 is planted;
FIG. 6 is a sectional view illustrating disassembly the frictional angled dental implant according to the third preferred embodiment of the present invention;
FIG. 7 is a sectional view illustrating the state that the implant in FIG. 6 is planted;
FIG. 8 is a sectional view illustrating disassembly the frictional angled dental implant according to the forth preferred embodiment of the present invention;
FIG. 9 is a sectional view illustrating the state that the implant in FIG. 8 is planted;
FIG. 10 is a sectional view illustrating disassembly the frictional angled dental implant according to the fifth preferred embodiment of the present invention;
FIG. 11 is a sectional view illustrating the state that the implant in FIG. 10 is planted;
FIG. 12 is a sectional view illustrating disassembly the frictional angled dental implant according to the sixth preferred embodiment of the present invention;
FIG. 13 is a sectional view illustrating the state that the implant in FIG. 12 is planted;
FIG. 14 is a sectional view illustrating disassembly the frictional angled dental implant according to the seventh preferred embodiment of the present invention;
FIG. 15 is a sectional view illustrating the state that the implant in FIG. 14 is planted;
FIG. 16 is a sectional view illustrating disassembly the frictional angled dental implant according to the eighth preferred embodiment of the present invention;
FIG. 17 is a sectional view illustrating the state that the implant in FIG. 16 is planted;
FIG. 18 is a sectional view illustrating disassembly the frictional angled dental implant according to the ninth preferred embodiment of the present invention; and
FIG. 19 is a sectional view illustrating the state that the implant in FIG. 18 is planted.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

Hereinafter, the frictional angled dental implants according to the preferred embodiments of the present invention are explained in detail referring to the accompanying drawings.

### 1^{st} embodiment

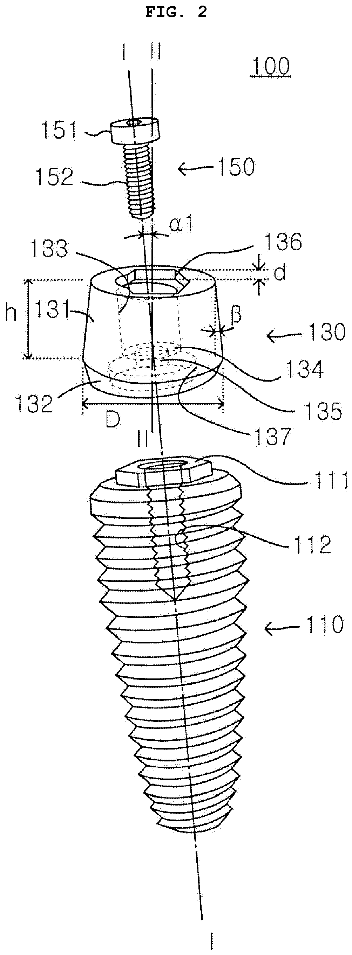

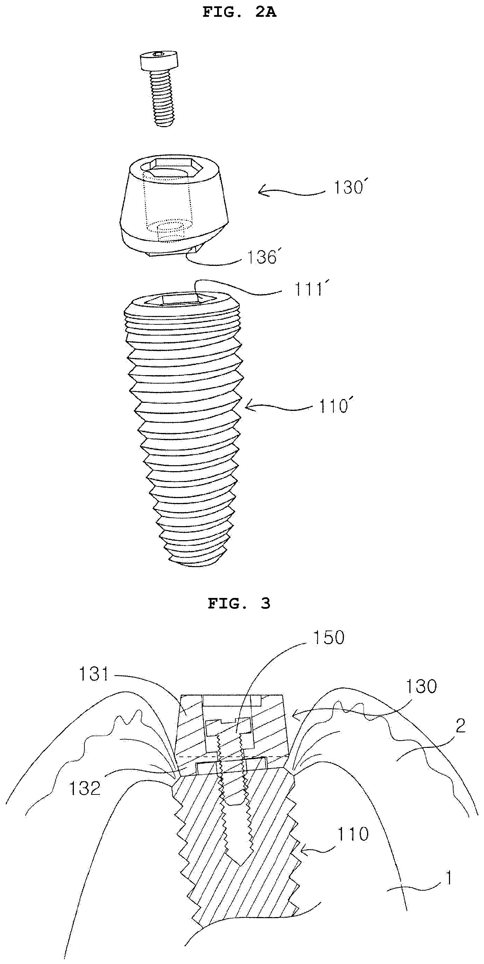

FIG. 2 is a sectional view illustrating disassembly the frictional angled dental implant according to the first preferred embodiment of the present invention.

As shown in FIG. 2, the dental implant 100 according to the present invention comprises the planted portion 110, the non-planted portion 130, and the fastening portion 150.

The planted portion 110 is for being fixedly planted in an alveolar bone, and it is formed with male threads on the outer periphery surface thereof in longitudinal direction to be threadly connected in the hole formed in the alveolar bone. The planted portion 110 is integrally formed with the hexagonal connecting protrusion 111 on the central axis I-I of the upper end thereof, and also formed with the fastening hole 112 on the central axis I-I of the upper end portion thereof in longitudinal direction to pass through the connecting protrusion 111. The size of the planted portion 110, the connecting protrusion 111, and the fastening hole 112 may be variously formed to meet a given condition.

The non-planted portion 130 is for being placed in the gum to be exposed from the alveolar bone, and it is detachable from the planted portion 110 and has another central axis II-II crossing with the central axis I-I of the planted portion 110. The crossing angle α1 may be 1°∼ 30°, and in this embodiment the angle α1 is 10°.

The non-planted portion 130 is composed of the abutment connecting portion 131 and the angled portion 132.

The abutment connecting portion 131 is to be frictionally connected with an abutment (not shown), and it is tapered to be narrower from its lower end to its upper end for the easy connection. The tapered angle β of the abutment connecting portion 131 is preferably 1°∼ 4°, more preferably 2°∼ 3° with respect to the central axis II-II. If the angle β is less than 1°, the abutment is not well frictionally connected to the abutment connecting portion 131 since they are too tightly contacted, and if the angle β is greater than 4°, the abutment is also not well frictionally connected to the abutment connecting portion 131 since they are too loosely contacted. The outer surface of the abutment connecting portion 131 is accurately processed by milling.

The height h of abutment connecting portion 131 from its lower end to its upper end is preferably 1mm ∼ 5mm, and more preferably 2mm ∼ 4mm, and the diameter D thereof is preferably 2mm ∼ 6mm, and more preferably 3mm ∼ 5mm. The height h of abutment connecting portion 131 corresponds with the thickness of the gum.

The abutment connecting portion 131 is formed with the greater through-hole 133 passing through the fastening portion 150 to be placed on the central axis I-I, and it is formed with the stepped jaw 134 on the end thereof. The stepped jaw 134 is formed with the smaller through-hole 135. At this time, the upper opening of the greater through-hole 133 is formed to be near the center of the upper end surface of the abutment connecting portion 131 or the non-planted portion 130.

The abutment connecting portion 131 is formed with the position guiding recess 136 on the upper portion thereof to be on the central axis II-II thereof, and the recess 136 is to be connected with the position guiding protrusion formed on the lower end surface of the abutment. The position guiding recess 136 may be non-circle, for example polygon such as triangle, tetragon, pentagon or hexagon. In this embodiment, the hexagonal position guiding recess 136 is suggested. Also, the depth d of the recess 136 is preferably 0.5mm ∼ 1.0mm.

In this embodiment, the position guiding recess 136 is suggested as a means to well guide the connection position when the abutment is connected to the abutment connecting portion 131, but alternatively a position guiding protrusion (not shown) may be formed on the upper end surface of the abutment connecting portion 131 to be on the central axis II-II thereof. The height of the position guiding protrusion is preferably 0.3mm ∼ 1.0mm. Surely, at this time, the lower end surface of the abutment will be formed with a corresponded position guiding recess.

The angled portion 132 is angled to fit the crossing angle α1, and it is integrally formed on the lower end of the abutment connecting portion 131. The angled portion 132 is also formed with a smaller through-hole 135 to be integrally connected to the through-hole 135 formed in the abutment connecting portion 131. The angled portion 132 is treated with TiN to have a good reactivity for the gum and to improve its aesthetic by giving the similar color with the gum.

Further, the angled portion 132 is formed with the connecting recess 137 on the bottom surface to be on the central axis II-II thereof, and the recess 137 is inserted with the connecting protrusion 111 formed on the upper end of the planted portion 110. The connecting recess 137 is preferably round such that the non-planted portion 150 may be rotated with respect to the planted portion 110, and further preferably has the diameter that the six corners of the connecting protrusion 111 is contacted such that the hexagonal connecting protrusion 111 is tightly connected.

The fastening portion 150 is for fixedly fastening the non-planted portion 130 to the planted portion 110, and a fastening bolt composed of a head and a body may be preferably applied. The head 151 of the fastening portion 150 is formed to be smaller than the through-hole 133 and greater than the through-hole 135 to be hung by the stepped jaw 134, and the body 152 is smaller than the through-hole 135 to be out. The fastening portion 150 is formed to be same or slightly longer than the fastening hole 112 formed in the planted portion 110.

In this embodiment, the connecting protrusion 111 is formed to the planted portion 110 and the connecting recess 136 is formed to the non-planted portion 130, however alternatively, as shown in FIG. 2A, the connecting recess 111' may be formed to the planted portion 110' and the connecting protrusion 136' may be formed to the non-planted portion 130'.

The planted state of the frictional angled dental implant in FIG. 2 is exemplary shown in FIG. 3. FIG. 3 is a sectional view illustrating the state that the implant in FIG. 2 is planted.

As shown in FIG. 3, the planted portion 110 is fixedly planted to the alveolar bone 1 to have the tilt angle of 10°. At this time, the upper end of the planted portion 110 is placed near the upper end of the alveolar bone 1.

The non-planted portion 130 is fixedly connected to the upper end portion of the planted portion 110 by the fastening portion 150. At this time, the angled portion 132 is buried under the gum 2, the lower end of the abutment connecting portion 131 is placed near the lower end of the gum 2, and the upper end of the portion 131 is placed near the upper end of the gum 2.

The abutment connecting portion 131 is strongly connected with the abutment with frictional force, and the prosthetics is connected on the abutment with cement.

With this structure, even the planted portion 110 is planted at a slant to the alveolar bone 1, the abutment and the prosthetics may be vertically erected with respect to the alveolar bone 1. Also, when required, the abutment and the prosthetics may be easily detached from the implant 100 using a proper detaching tool.

### 2^{nd} embodiment

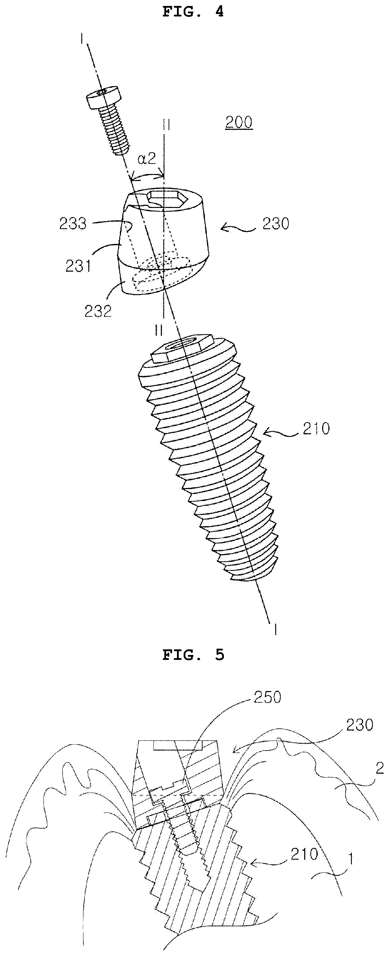

FIG. 4 is a sectional view illustrating disassembly the frictional angled dental implant according to the second preferred embodiment of the present invention.

As shown in FIG. 4, the dental implant 200 is nearly identical with the dental implant 100 in the 1^{st} embodiment except that the crossing angle α2 between the central axis I-I of the planted portion 210 and the central axis II-II of the non-planted portion 230 is 20°, and therefore the same elements are not explained but only the different ones will be explained.

In the 1^{st} embodiment, the greater through-hole 133 has a slanted angle of 10° with respect to the central axis II-II, and thereby the upper opening is near the center of the upper end surface of the abutment connecting portion 131 or the non-planted portion 130. However, in this embodiment, the greater through-hole 233 has a slanted angle of 20° with respect to the central axis II-II, and thereby the upper opening is near the border of the upper end surface of the abutment connecting portion 231 or the non-planted portion 230.

The angled portion 232 is formed to be greater than the angled portion 132 to correspond with the slant angle of 20°.

The planted state of the frictional angled dental implant in FIG. 4 is exemplary shown in FIG. 5. FIG. 5 is a sectional view illustrating the state that the implant in FIG. 4 is planted.

As shown in FIG. 5, the planted portion 210 is fixedly planted to the alveolar bone 1 to have the slant angle of 20°. At this time, the upper end of the planted portion 210 is near the upper end of the alveolar bone 1.

The non-planted portion 230 is fixedly connected to the upper end portion of the planted portion 210 by the fastening portion 250. At this time, the angled portion 232 is buried under the gum 2, the lower end of the abutment connecting portion 231 is placed near the lower end of the gum 2, and the upper end of the portion 231 is placed near the upper end of the gum 2.

The abutment connecting portion 231 is strongly connected with the abutment with frictional force, and the prosthetics is connected on the abutment with cement.

With this structure, even the planted portion 210 is planted at a slant to the alveolar bone 1, the abutment and the prosthetics may be vertically erected with respect to the alveolar bone 1. Also, when required, the abutment and the prosthetics may be easily detached from the implant 200 using a proper detaching tool.

### 3^{rd} embodiment

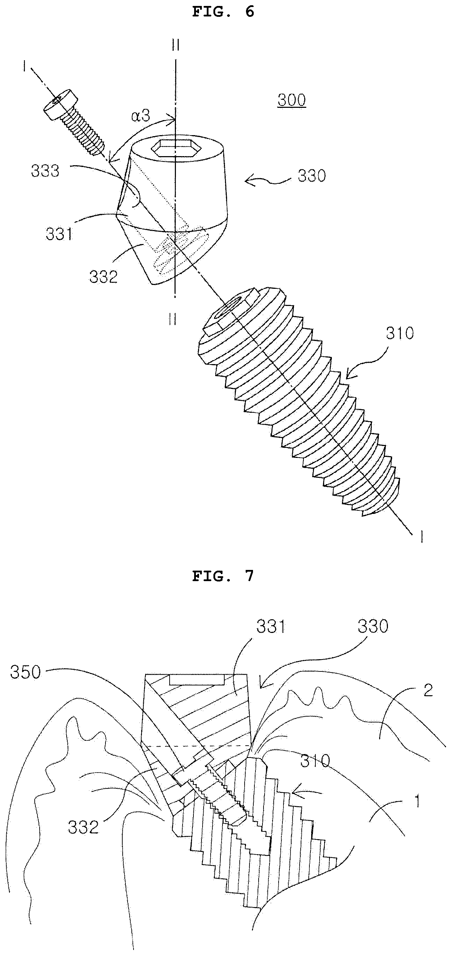

FIG. 6 is a sectional view illustrating disassembly the frictional angled dental implant according to the third preferred embodiment of the present invention.

As shown in FIG. 4, the dental implant 300 is nearly identical with the dental implant 200 in the 2^{nd} embodiment except that the crossing angle α3 between the central axis I-I of the planted portion 310 and the central axis II-II of the non-planted portion 330 is 30°, and therefore the same elements are not explained but only the different ones will be explained.

In the 2^{nd} embodiment, the greater through-hole 233 has a slanted angle of 20° with respect to the central axis II-II, and thereby the upper opening is near the border of the upper end surface of the abutment connecting portion 231 or the non-planted portion 230. However, in this embodiment, the greater through-hole 333 has a slanted angle of 30° with respect to the central axis II-II, and thereby the upper opening is on the side surface of the abutment connecting portion 331 or the non-planted portion 330.

The angled portion 332 is formed to be greater than the angled portion 232 to correspond with the slant angle of 30°.

The planted state of the frictional angled dental implant in FIG. 6 is exemplary shown in FIG. 7. FIG. 7 is a sectional view illustrating the state that the implant in FIG. 6 is planted.

As shown in FIG. 7, the planted portion 310 is fixedly planted to the alveolar bone 1 to have the slant angle of 30°. At this time, the upper end of the planted portion 310 is near the upper end of the alveolar bone 1.

The non-planted portion 330 is fixedly connected to the upper end portion of the planted portion 310 by the fastening portion 350. At this time, the angled portion 332 is buried under the gum 2, the lower end of the abutment connecting portion 331 is placed near the lower end of the gum 2, and the upper end of the portion 331 is placed near the upper end of the gum 2.

The abutment connecting portion 331 is strongly connected with the abutment with frictional force, and the prosthetics is connected on the abutment with cement.

With this structure, even the planted portion 310 is planted at a slant to the alveolar bone 1, the abutment and the prosthetics may be vertically erected with respect to the alveolar bone 1. Also, when required, the abutment and the prosthetics may be easily detached from the implant 300 using a proper detaching tool.

### 4^{th} embodiment

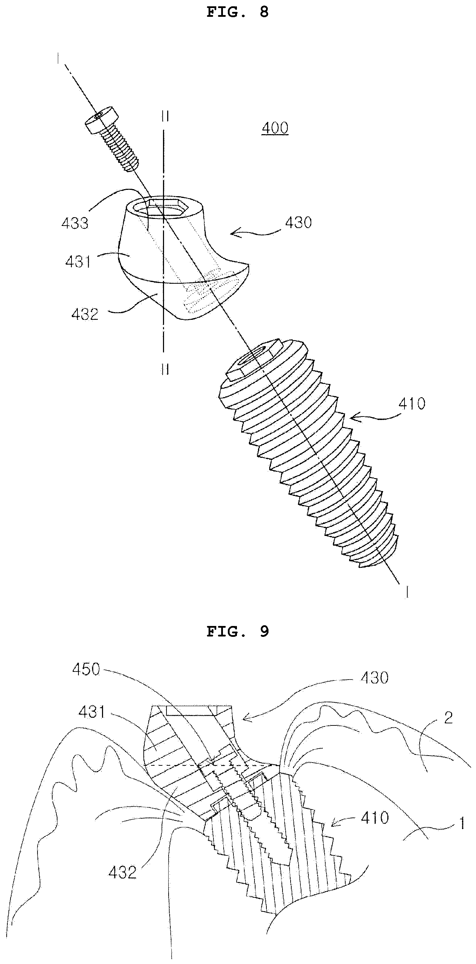

FIG. 8 is a sectional view illustrating disassembly the frictional angled dental implant according to the forth preferred embodiment of the present invention.

As shown in FIG. 8, the dental implant 400 is nearly identical with the dental implant 300 in the 3^{th} embodiment except for the position of the upper opening of the greater through-hole 433, and therefore the same elements are not explained but only the different ones will be explained.

In the 3^{th} embodiment, the greater through-hole 333 has a slanted angle of 30° with respect to the central axis II-II, and thereby the upper opening is on the side surface of the upper end portion of the abutment connecting portion 331 or the non-planted portion 330. However, in this embodiment, the abutment connecting portion 431 is slightly moved towards left side with respect to the angled portion 432 in the drawing, and thereby the greater through-hole 433 is on the upper end surface of the abutment connecting portion 431 or the non-planted portion 430.

Like this, if the greater through-hole 433 is present on the upper end surface of the abutment connecting portion 431 or the non-planted portion 430, otherwise to the 3^{th} embodiment, when it is required to detach the non-planted portion 430 from the planted portion 410, the non-planted portion 430 may be safely detached without contact or damage of the gum.

The angled portion 432 is formed to be greater than the angled portion 332 in the 3^{th} embodiment to correspond with the slant angle of 30° and the abutment connecting portion 431 moved from the angled portion 432.

The planted state of the frictional angled dental implant in FIG. 8 is exemplary shown in FIG. 9. FIG. 9 is a sectional view illustrating the state that the implant in FIG. 8 is planted.

As shown in FIG. 9, the planted portion 410 is fixedly planted to the alveolar bone 1 to have the slant angle of 30°. At this time, the upper end of the planted portion 410 is near the upper end of the alveolar bone 1.

The non-planted portion 430 is fixedly connected to the upper end portion of the planted portion 410 by the fastening portion 450. At this time, the angled portion 432 is buried under the gum 2, the lower end of the abutment connecting portion 431 is placed near the lower end of the gum 2, and the upper end of the portion 231 is placed near the upper end of the gum 2.

The abutment connecting portion 431 is strongly connected with the abutment with frictional force, and the prosthetics is connected on the abutment with cement.

With this structure, even the planted portion 410 is planted at a slant to the alveolar bone 1, the abutment and the prosthetics may be vertically erected with respect to the alveolar bone 1. Also, when required, the abutment and the prosthetics may be easily detached from the implant 200 using a proper detaching tool.

### 5^{th} embodiment

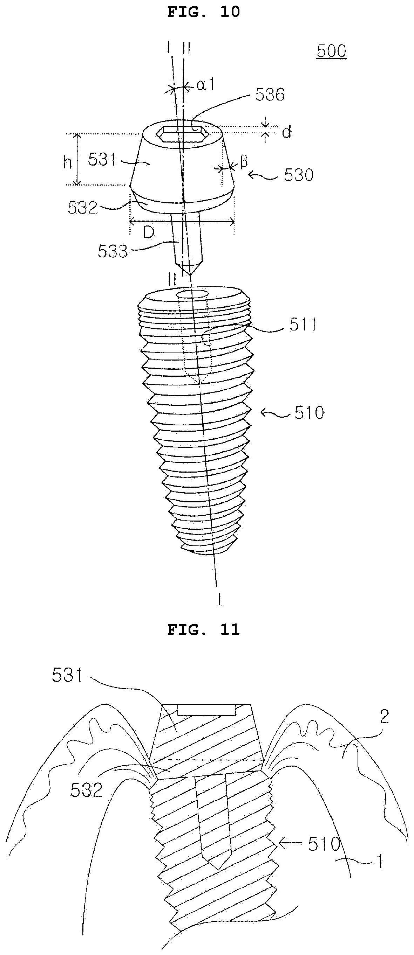

FIG. 10 is a sectional view illustrating disassembly the frictional angled dental implant according to the fifth preferred embodiment of the present invention.

As shown in FIG. 10, the dental implant 500 according to the present invention comprises the planted portion 510 and the non-planted portion 530.

The planted portion 510 is for being fixedly planted in an alveolar bone, and it is formed with male threads on the outer periphery surface thereof in longitudinal direction to be threadly connected in the hole formed in the alveolar bone. The planted portion 510 is formed with the fastening hole 511 on the central axis I-I of the upper end thereof in longitudinal direction. The size of the planted portion 510 and the fastening hole 511 may be variously formed to meet a given condition.

The non-planted portion 530 is for being placed in the gum to be exposed from the alveolar bone, and it is detachable from the planted portion 510 and has another central axis II-II crossing with the central axis I-I of the planted portion 510. The crossing angle α1 may be 1°∼ 30°, and in this embodiment the angle α1 is 10°.

The non-planted portion 530 is composed of the abutment connecting portion 531, the angled portion 532, and the inserted fastening portion 533.

The abutment connecting portion 531 is to be frictionally connected with an abutment (not shown), and it is tapered to be narrower from its lower end to its upper end for the easy connection. The tapered angle β of the abutment connecting portion 531 is preferably 1°∼ 4°, more preferably 2°∼ 3° with respect to the central axis II-II. If the angle β is less than 1°, the abutment is not well frictionally connected to the abutment connecting portion 531 since they are too tightly contacted, and if the angle β is greater than 4°, the abutment is also not well frictionally connected to the abutment connecting portion 531 since they are too loosely contacted. The outer surface of the abutment connecting portion 531 is accurately processed by milling.

The height h of abutment connecting portion 531 from its lower end to its upper end is preferably 1mm ∼ 5mm, and more preferably 2mm ∼ 4mm, and the diameter D thereof is preferably 2mm ∼ 6mm, and more preferably 3mm ∼ 5mm. The height h of abutment connecting portion 531 corresponds with the thickness of the gum.

The abutment connecting portion 531 is formed with the position guiding recess 536 on the upper portion thereof to be on the central axis II-II thereof, and the recess 536 is to be connected with the position guiding protrusion formed on the lower end surface of the abutment. The position guiding recess 536 may be non-circle, for example polygon such as triangle, tetragon, pentagon or hexagon. In this embodiment, the hexagonal position guiding recess 536 is suggested. Also, the depth d of the recess 536 is preferably 0.5mm ∼ 1.0mm.

In this embodiment, the position guiding recess 536 is suggested as a means to well guide the connection position when the abutment is connected to the abutment connecting portion 531, but alternatively a position guiding protrusion (not shown) may be formed on the upper end surface of the abutment connecting portion 531 to be on the central axis II-II thereof. The height of the position guiding protrusion is preferably 0.3mm ∼ 1.0mm. Surely, at this time, the lower end surface of the abutment will be formed with a corresponded position guiding recess.

The angled portion 532 is angled to fit the crossing angle α1, and it is integrally formed on the lower end of the abutment connecting portion 531. The angled portion 532 is treated with TiN to have a good reactivity for the gum and to improve its aesthetic by giving the similar color with the gum.

The inserted fastening portion 533 is integrally formed to the lower end of the angled portion 532 to be on the central axis I-I of the planted portion 510. The non-planted portion 530 is fixedly connected to the planted portion 510 by strongly inserted connecting the inserted fastening portion 533 to the fastening hole 511 formed in the upper portion of the planted portion 110.

The planted state of the frictional angled dental implant in FIG. 10 is exemplary shown in FIG. 11. FIG. 11 is a sectional view illustrating the state that the implant in FIG. 10 is planted.

As shown in FIG. 11, the planted portion 510 is fixedly planted to the alveolar bone 1 to have the tilt angle of 10°. At this time, the upper end of the planted portion 510 is placed near the upper end of the alveolar bone 1.

The non-planted portion 530 is fixedly connected to the planted portion 510 by the strongly inserted connection between the inserted fastening portion 533 and the fastening hole 511. At this time, the angled portion 532 is buried under the gum 2, the lower end of the abutment connecting portion 531 is placed near the lower end of the gum 2, and the upper end of the portion 531 is placed near the upper end of the gum 2.

The abutment connecting portion 531 is strongly connected with the abutment with frictional force, and the prosthetics is connected on the abutment with cement.

With this structure, even the planted portion 510 is planted at a slant to the alveolar bone 1, the abutment and the prosthetics may be vertically erected with respect to the alveolar bone 1. Also, when required, the abutment and the prosthetics may be easily detached from the implant 500 using a proper detaching tool.

### 6^{th} embodiment

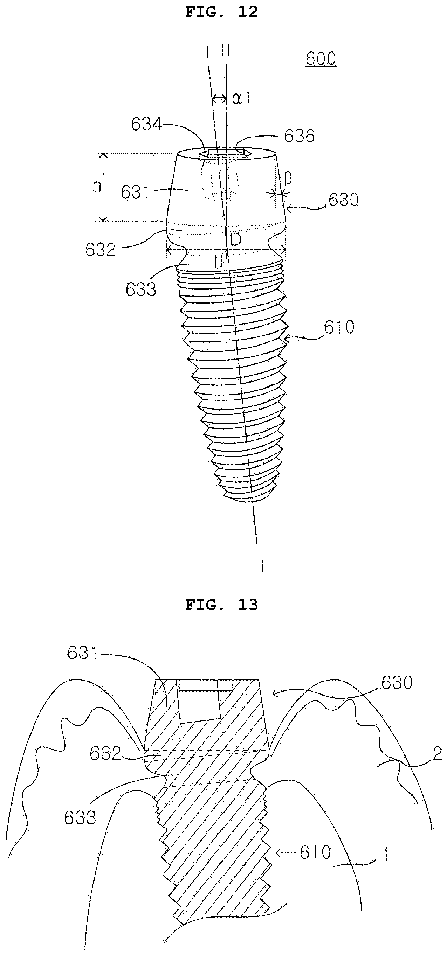

FIG. 12 is a sectional view illustrating disassembly the frictional angled dental implant according to the sixth preferred embodiment of the present invention.

As shown in FIG. 12, the dental implant 600 according to the present invention comprises the planted portion 610 and the non-planted portion 630.

The planted portion 510 is for being fixedly planted in an alveolar bone, and it is formed with male threads on the outer periphery surface thereof in longitudinal direction to be threadly connected in the hole formed in the alveolar bone.

The non-planted portion 630 is for being placed in the gum to be exposed from the alveolar bone, and it has another central axis II-II crossing with the central axis I-I of the planted portion 610. The crossing angle α1 may be 1°∼ 30°, and in FIG. 12, the angle α1 is 10°.

The non-planted portion 630 is composed of the abutment connecting portion 631, the angled portion 632, and the neck portion 633, which are formed in one body. To help understanding, each portion is virtually divided with the dotted line.

The abutment connecting portion 631 is to be frictionally connected with an abutment (not shown), and it is tapered to be narrower from its lower end to its upper end for the easy connection. The tapered angle β of the abutment connecting portion 631 is preferably 1°∼ 4°, more preferably 2°∼ 3° with respect to the central axis II-II. If the angle β is less than 1°, the abutment is not well frictionally connected to the abutment connecting portion 631 since they are too tightly contacted, and if the angle β is greater than 4°, the abutment is also not well frictionally connected to the abutment connecting portion 631 since they are too loosely contacted. The outer surface of the abutment connecting portion 631 is accurately processed by milling.

The height h of abutment connecting portion 631 from its lower end to its upper end is preferably 1mm ∼ 5mm, and more preferably 2mm ∼ 4mm, and the diameter D thereof is preferably 2mm ∼ 6mm, and more preferably 3mm ∼ 5mm. The height h of abutment connecting portion 631 corresponds with the thickness of the gum.

The abutment connecting portion 631 is formed with the planting tool inserted recess 634 on the central axis I-I of the planted portion 610 to be inserted with a planting tool. The opening of the recess 634 is formed near the center of the upper end surface of the abutment connecting portion 631 or the non-planted portion 630.

The abutment connecting portion 631 is formed with the position guiding recess 636 on the upper portion thereof to be on the central axis II-II thereof, and the recess 636 is to be connected with the position guiding protrusion formed on the lower end surface of the abutment. The position guiding recess 636 may be non-circle, for example polygon such as triangle, tetragon, pentagon or hexagon. In this embodiment, the hexagonal position guiding recess 636 is suggested. Also, the depth d of the recess 136 is preferably 0.5mm ∼ 1.0mm.

In this embodiment, the position guiding recess 636 is suggested as a means to well guide the connection position when the abutment is connected to the abutment connecting portion 631, but alternatively a position guiding protrusion (not shown) may be formed on the upper end surface of the abutment connecting portion 631 to be on the central axis II-II thereof. The height of the position guiding protrusion is preferably 0.3mm ∼ 1.0mm. Surely, at this time, the lower end surface of the abutment will be formed with a corresponded position guiding recess.

The angled portion 632 is angled to fit the crossing angle α1, and it is integrally formed on the lower end of the abutment connecting portion 631. The angled portion 632 is treated with TiN to have a good reactivity for the gum and to improve its aesthetic by giving the similar color with the gum.

The neck portion 633 is formed to have a concave curved surface to integrally connect the planted portion 610 and the angled portion 632. The neck portion 633 is treated with TiN to have a good reactivity for the gum and to improve its aesthetic by giving the similar color with the gum. In this embodiment, the neck portion 633 is formed to have the concave curved surface, alternatively, to have a narrow shape like a neck of a gourd bottle, a conical shape to be wider from its lower end to its upper end, and a conical shape to be narrower from its lower end to its upper end, and also the outer surface of the various neck portion may be formed with a plurality of micro grooves. These micro grooves may enhance the connecting force for the gum.

The planted state of the frictional angled dental implant in FIG. 12 is exemplary shown in FIG. 13. FIG. 13 is a sectional view illustrating the state that the implant in FIG. 12 is planted.

As shown in FIG. 13, the planted portion 610 is fixedly planted to the alveolar bone 1 to have the tilt angle of 10°. At this time, the upper end of the planted portion 610 is placed near the upper end of the alveolar bone 1.

The angled portion 632 is buried under the gum 2, the lower end of the abutment connecting portion 631 is placed near the lower end of the gum 2, and the upper end of the portion 131 is placed near the upper end of the gum 2.

The abutment connecting portion 631 is strongly connected with the abutment with frictional force, and the prosthetics is connected on the abutment with cement.

With this structure, even the planted portion 610 is planted at a slant to the alveolar bone 1, the abutment and the prosthetics may be vertically erected with respect to the alveolar bone 1. Also, when required, the abutment and the prosthetics may be easily detached from the implant 600 using a proper detaching tool.

### 7^{th} embodiment

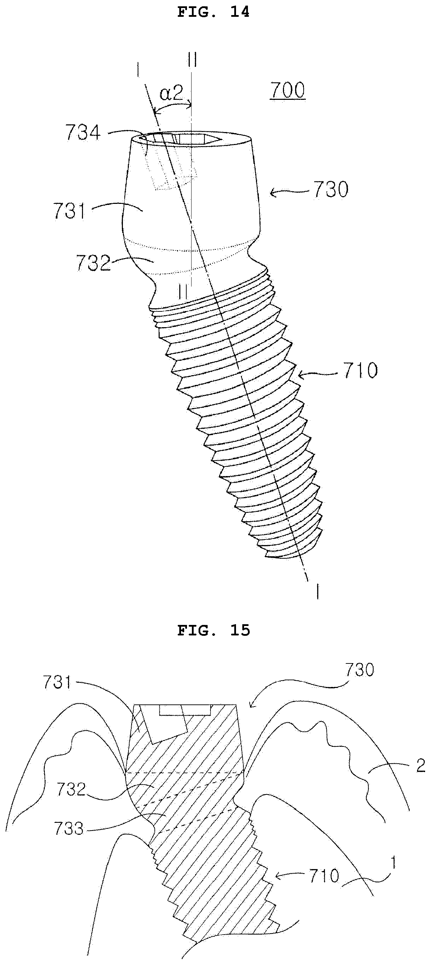

FIG. 14 is a sectional view illustrating disassembly the frictional angled dental implant according to the seventh preferred embodiment of the present invention.

As shown in FIG. 14, the dental implant 700 is nearly identical with the dental implant 600 in the 6^{th} embodiment except that the crossing angle α2 between the central axis I-I of the planted portion 710 and the central axis II-II of the non-planted portion 730 is 20°, and therefore the same elements are not explained but only the different ones will be explained.

In the 6^{th} embodiment, the planting tool inserted recess 634 has a slant angle of 10° with respect to the central axis II-II such that the opening is formed near the center of the upper end surface of the abutment connecting portion 631 or the non-planted portion 630, however, in this embodiment, the planting tool inserted recess 734 has a slant angle of 20° with respect to the central axis II-II such that the opening is formed on the border of the upper end surface of the abutment connecting portion 731 or the non-planted portion 730.

The angled portion 732 is formed to be greater than the angled portion 632 in the 6^{th} embodiment to correspond the slant angle of 20°.

The planted state of the frictional angled dental implant in FIG. 14 is exemplary shown in FIG. 15. FIG. 15 is a sectional view illustrating the state that the implant in FIG. 14 is planted.

As shown in FIG. 15, the planted portion 710 is fixedly planted to the alveolar bone 1 to have the tilt angle of 20°. At this time, the upper end of the planted portion 710 is placed near the upper end of the alveolar bone 1.

The angled portion 732 is buried under the gum 2, the lower end of the abutment connecting portion 731 is placed near the lower end of the gum 2, and the upper end of the portion 731 is placed near the upper end of the gum 2.

The abutment connecting portion 731 is strongly connected with the abutment with frictional force, and the prosthetics is connected on the abutment with cement.

With this structure, even the planted portion 710 is planted at a slant to the alveolar bone 1, the abutment and the prosthetics may be vertically erected with respect to the alveolar bone 1. Also, when required, the abutment and the prosthetics may be easily detached from the implant 700 using a proper detaching tool.

### 8^{th} embodiment

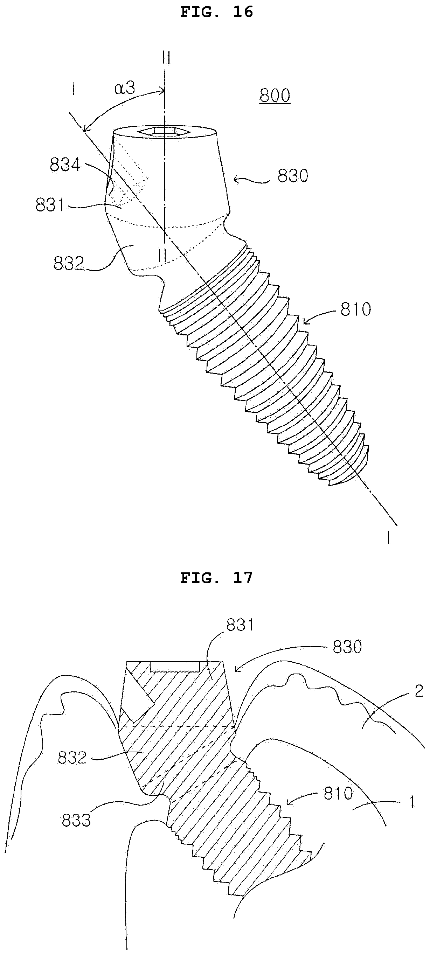

FIG. 16 is a sectional view illustrating disassembly the frictional angled dental implant according to the eighth preferred embodiment of the present invention.

As shown in FIG. 16, the dental implant 800 is nearly identical with the dental implant 700 in the 7^{th} embodiment except that the crossing angle α2 between the central axis I-I of the planted portion 810 and the central axis II-II of the non-planted portion 830 is 30°, and therefore the same elements are not explained but only the different ones will be explained.

In the 7^{th} embodiment, the planting tool inserted recess 734 has a slant angle of 20° with respect to the central axis II-II such that the opening is formed on the border of the upper end surface of the abutment connecting portion 731 or the non-planted portion 730, however, in this embodiment, the planting tool inserted recess 834 has a slant angle of 30° with respect to the central axis II-II such that the opening is formed on the side surface of the upper end surface of the abutment connecting portion 831 or the non-planted portion 830.

The angled portion 832 is formed to be greater than the angled portion 732 in the 7^{th} embodiment to correspond the slant angle of 30°.

The planted state of the frictional angled dental implant in FIG. 16 is exemplary shown in FIG. 17. FIG. 17 is a sectional view illustrating the state that the implant in FIG. 16 is planted.

As shown in FIG. 17, the planted portion 810 is fixedly planted to the alveolar bone 1 to have the tilt angle of 30°. At this time, the upper end of the planted portion 810 is placed near the upper end of the alveolar bone 1.

The angled portion 832 is buried under the gum 2, the lower end of the abutment connecting portion 831 is placed near the lower end of the gum 2, and the upper end of the portion 831 is placed near the upper end of the gum 2.

The abutment connecting portion 831 is strongly connected with the abutment with frictional force, and the prosthetics is connected on the abutment with cement.

With this structure, even the planted portion 810 is planted at a slant to the alveolar bone 1, the abutment and the prosthetics may be vertically erected with respect to the alveolar bone 1. Also, when required, the abutment and the prosthetics may be easily detached from the implant 800 using a proper detaching tool.

### 9^{th} embodiment

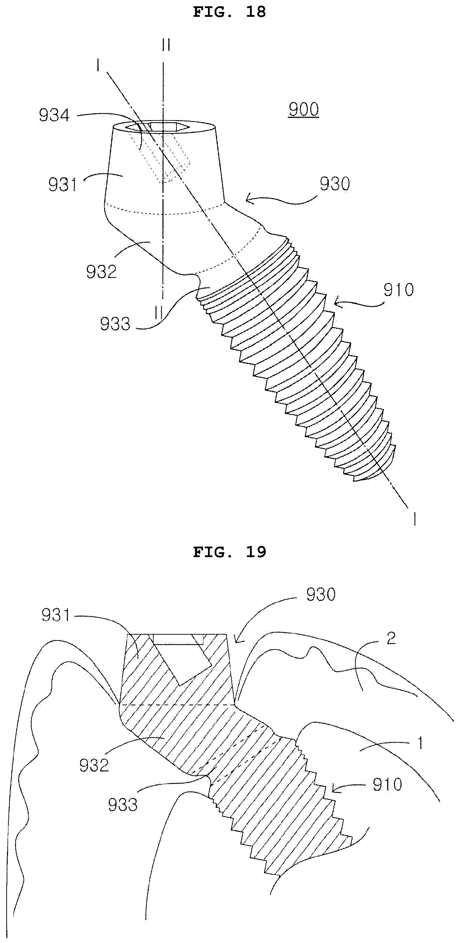

FIG. 18 is a sectional view illustrating disassembly the frictional angled dental implant according to the ninth preferred embodiment of the present invention.

As shown in FIG. 18, the dental implant 900 is nearly identical with the dental implant 800 in the 3^{th} embodiment except for the position of the upper opening of the planting tool inserted recess 934, and therefore the same elements are not explained but only the different ones will be explained.

In the 8^{th} embodiment, the planting tool inserted recess 834 has a slanted angle of 30° with respect to the central axis II-II, and thereby the opening is on the side surface of the upper end portion of the abutment connecting portion 831 or the non-planted portion 830. However, in this embodiment, the abutment connecting portion 931 is slightly moved towards left side with respect to the angled portion 932 in the drawing, and thereby the planting tool inserted recess 934 is on the upper end surface of the abutment connecting portion 931 or the non-planted portion 930.

Like this, if the planting tool inserted recess 934 is present on the upper end surface of the abutment connecting portion 931 or the non-planted portion 930, otherwise to the 8^{th} embodiment, when it is required to detach the non-planted portion 930 from the planted portion 910, the non-planted portion 930 may be safely detached without contact or damage of the gum.

The angled portion 932 is formed to be greater than the angled portion 932 in the 8^{th} embodiment to correspond with the slant angle of 30° and the abutment connecting portion 431 moved from the angled portion 932.

The planted state of the frictional angled dental implant in FIG. 18 is exemplary shown in FIG. 19. FIG. 19 is a sectional view illustrating the state that the implant in FIG. 18 is planted.

As shown in FIG. 19, the planted portion 910 is fixedly planted to the alveolar bone 1 to have the tilt angle of 30°. At this time, the upper end of the planted portion 910 is placed near the upper end of the alveolar bone 1.

The angled portion 932 is buried under the gum 2, the lower end of the abutment connecting portion 931 is placed near the lower end of the gum 2, and the upper end of the portion 931 is placed near the upper end of the gum 2.

The abutment connecting portion 931 is strongly connected with the abutment with frictional force, and the prosthetics is connected on the abutment with cement.

With this structure, even the planted portion 910 is planted at a slant to the alveolar bone 1, the abutment and the prosthetics may be vertically erected with respect to the alveolar bone 1. Also, when required, the abutment and the prosthetics may be easily detached from the implant 900 using a proper detaching tool.

Although a few embodiments of the present invention have been shown and described, the present invention is not limited to the described embodiments. Instead, it would be appreciated by those skilled in the art that changes may be made to these embodiments without departing from the scope of the present invention which is defined by the appended claims.

## Claims

1. A frictional angled dental implant (100, 200, 300, 400) comprising:
a planted portion (110, 210, 310, 410) being fixedly planted to in an alveolar bone (1);
a non-planted portion (130, 230, 330, 430) having the height (h) corresponding to the thickness of gum (2) and provided with an abutment connecting portion (131, 231, 331, 431) on the upper portion thereof, the abutment connecting portion (131, 231, 331, 431) being frictionally connected with an abutment; and
a fastening portion (150, 250, 350, 450) for fixedly fastening the non-planted portion (130, 230, 330, 430) to the upper end of the planted portion (110, 210, 310, 410), wherein the central axis (I-I) of the planted portion (110, 210, 310, 410) and the central axis (II-II) of the non-planted portion (130, 230, 330, 430) are crossed from each other to have a crossed angle (α1, α2, α3), and
the non-planted portion (130, 230, 330, 430) is formed with a though-hole (133, 233, 333, 433) on the central axis of the planted portion, the through-hole being inserted with the fastening portion, and further provided with an angled portion (132, 232, 332, 432) to be connected to the planted portion, and the angled portion is angled to be corresponded to the crossed angle (α1, α2, α3),
**characterized in that**
the abutment connecting portion (131, 231, 331, 431) is tapered to be narrower from its lower end to its upper end, the tapered angle (β) is 1°∼ 4° with respect to the central axis thereof;
the non-planted portion (130) is formed with a position guiding recess (136) on the upper end portion thereof, the position guiding recess (136) being connected with the lower end portion of the abutment to be inserted, and the position guiding recess (136) has a hexagonal shape and a depth of 0.5mm ∼ 1.0mm.

2. The frictional angled dental implant according to claim 1, wherein the crossed angle (α1, α2, α3) is 1°∼ 30°.

3. The frictional angled dental implant according to claim 1, wherein the through-hole (133) has an opening on the upper side thereof, the opening being placed on the center of the upper end surface of the abutment connecting portion (131).

4. The frictional angled dental implant according to claim 1, wherein the through-hole (333) has an opening on the upper side thereof, the opening being placed on the border of the upper end surface of the abutment connecting portion (331).

5. The frictional angled dental implant according to claim 1, wherein the through-hole (233) has an opening on the upper side thereof, the opening being placed on the side surface of the upper end portion of the abutment connecting portion (231) and on the central axis (I-I) of the planted portion (210).

6. The frictional angled dental implant according to claim 3, wherein the abutment connecting portion (431) is moved aside with respect to the angled portion (432), and the through-hole (433) has an opening on the upper side thereof, the opening being placed on the upper end surface of the abutment connecting portion (430) and on the central axis (I-I) of the planted portion (410).

7. A frictional angled dental implant (500) comprising:
a planted portion (510) being fixedly planted to in an alveolar bone (1); and
a non-planted portion (530) having the height (h) corresponding to the thickness of gum (2) and provided with an abutment connecting portion (531) on the upper portion thereof, the abutment connecting portion (531) being frictionally connected with an abutment, wherein
the central axis (I-I) of the planted portion (510) and the central axis (II-II) of the non-planted portion (530) are crossed from each other to have a crossed angle (α1), the non-planted portion (530) is integrally formed with an inserted fastening portion (533) on the lower end thereof to be on the central axis (I-I) of the planted portion (510), the inserted fastening portion (533) being inserted with the planted portion (510) therein, and further provided with an angled portion (532) to connect the abutment connecting portion (531) to the inserted fastening portion (533), and the angled portion is angled to be corresponded to the crossed angle (α1),
**characterized in that**
the abutment connecting portion (531) is tapered to be narrower from its lower end to its upper end, the tapered angle (β) is 1°∼ 4° with respect to the central axis thereof;
the non-planted portion (530) is formed with a position guiding recess (536) on the upper end portion thereof, the position guiding recess (536) being connected with the lower end portion of the abutment to be inserted, the position guiding recess has a hexagonal shape and a depth of 0.5mm ∼ 1.0mm.

8. The frictional angled dental implant according to claim 7, wherein the crossed angle is 1°∼ 30°.

9. A frictional angled dental implant (600, 700, 800, 900) comprising:
a planted portion (610, 710, 810, 910) being fixedly planted to in an alveolar bone (1); and
a non-planted portion (630, 730, 830, 930) having the height (h) corresponding to the thickness of gum (2), integrally formed on the upper end of the planted portion, and provided with an abutment connecting portion (631) on the upper portion thereof, the abutment connecting portion (631) being frictionally connected with an abutment, and further provided with a neck portion (633, 733, 833, 933) and an angled portion (632, 732, 832, 932), the neck portion (633, 733, 833, 933) being connected at the planted portion (610, 710, 810, 910), the angled portion (632, 732, 832, 932) connecting the abutment connecting portion (631, 731, 831, 931) to the neck portion (633, 733, 833, 933) to be corresponded to the crossed angle (α1, α2, α3), wherein
the central axis (I-I) of the planted portion (610, 710, 810, 910) and the central axis (II-II) of the non-planted portion (630) are crossed from each other to have a crossed angle (α1, α2, α3), and the non-planted portion (630, 730, 830, 930) is formed with a planting tool inserted recess (634, 734, 834, 934) on the central axis (I-I) of the planted portion (610, 710, 810, 910),
**characterized in that**
the abutment connecting portion (631, 731, 831, 931) is tapered to be narrower from its lower end to its upper end, the tapered angle (β) is 1°∼ 4° with respect to the central axis thereof;
the non-planted portion (630, 730, 830, 930) is formed with a position guiding recess (636) on the upper end portion thereof, the position guiding recess (636) being connected with the lower end portion of the abutment to be inserted, the position guiding recess has a hexagonal shape and a depth of 0.5mm ∼ 1.0mm.

10. The frictional angled dental implant (600, 700, 800, 900) according to claim 9, wherein the crossed angle (α1, α2, α3) is 1°∼ 30°.

11. The frictional angled dental implant (600) according to claim 9, wherein the planting tool inserted recess (634) has an opening being placed on the center of the upper end surface of the abutment connecting portion (631).

12. The frictional angled dental implant (800) according to claim 9, wherein the planting tool inserted recess (834) has an opening being placed on the border of the upper end surface of the abutment connecting portion (831).

13. The frictional angled dental implant (700) according to claim 9, wherein the planting tool inserted recess (734) has an opening on the side surface of the upper end portion of the abutment connecting portion (731).

14. The frictional angled dental implant (900) according to claim 9, wherein the abutment connecting portion (931) is moved aside with respect to the angled portion (932), and the planting tool inserted recess (934) has an opening being placed on the upper end surface of the abutment connecting portion (931).

15. The frictional angled dental implant (100, 200, 300, 400, 500, 600, 700, 800, 900) according to any one of claims 1 - 14, wherein the tapered angle (β) is 2°∼ 3°.

16. The frictional angled dental implant (100, 200, 300, 400, 500, 600, 700, 800, 900) according to any one of claims 1 to 14, wherein the height (h) of the abutment connecting portion (131, 231, 331, 431, 531, 631, 731, 831, 931) from its lower end to its upper end is 1mm ∼ 5mm.

17. The frictional angled dental implant (100, 200, 300, 400, 500, 600, 700, 800, 900) according to claim 16, wherein the height (h) is 2mm ∼ 4mm.

18. The frictional angled dental implant (100, 200, 300, 400, 500, 600, 700, 800, 900) according to any one of claims 1 to 14, wherein the diameter of the lower end of the abutment connecting portion (131, 231, 331, 431, 531, 631, 731, 831, 931) is 2mm ∼ 6mm.

19. The frictional angled dental implant (131, 231, 331, 431, 531, 631, 731, 831, 931) according to claim 18, wherein the diameter of the lower end of the abutment connecting portion (131, 231, 331, 431, 531, 631, 731, 831, 931) is 3mm ∼ 5mm.

## Patentansprüche

1. Ein reibschlüssiges gewinkeltes Dentalimplantat (100, 200, 300, 400) umfassend:
ein gepflanztes Teil (110, 210, 310, 410) das in einem Alveolarknochen (1) fest eingepflanzt ist,
ein nicht-gepflanztes Teil (130, 230, 330, 430) mit der Höhe (h) entsprechend der Dicke von Gummi (2) und bereitgestellt mit einem Abutment-Verbindungsteil (131, 231, 331, 431) auf dem oberen Teil davon, das Abutment-Verbindungsteil (131, 231, 331, 431) ist reibschlüssig mit einem Abutment verbunden; und
ein Befestigungsteil (150, 250, 350, 450) für feste Befestigung des nicht-gepflanzten Teils (130, 230, 330, 430) an das obere Ende des gepflanzten Teils (110, 210, 310, 410), wobei die zentrale Achse (I-I) des gepflanzten Teils (110, 210, 310, 410) und die zentrale Achse (II-II) des nicht-gepflanzten Teils (130, 230, 330, 430) sich gegenseitig kreuzen, um einen gekreuzten Winkel (α1, α2, α3) zu bilden, und
der nicht-gepflanzte Teil (130, 230, 330, 430) wird mit einem Durchgangsloch (133, 233, 333, 433) an der zentralen Achse des gepflanzten Teils gebildet, das Durchgangsloch (133, 233, 333, 433) ist mit dem Befestigungsteil eingesetzt und weiter mit einem gewinkelten Teil (132, 232, 332, 432) bereitgestellt, um an das gepflanzte Teil gebunden zu werden, und der gewinkelte Teil ist gewinkelt, um dem gekreuzten Winkel (α1, α2, α3) zu entsprechen,
**dadurch gekennzeichnet, dass**
das Abutment-Verbindungsteil (131, 231, 331, 431) konisch ist, um von seinem unteren Ende bis zu seinem oberen Ende schmaler zu sein, der konische Winkel (β) ist 1°∼ 4° in Bezug auf die zentrale Achse davon;
das nicht-gepflanzte Teil (130) wird mit einer Positionsführungsaussparung (136) an dem oberen Endteil davon gebildet, die Positionsführungsaussparung (136) ist verbunden mit dem unteren Endteil des Abutments, das eingeführt werden soll, und die Positionsführungsaussparung (136) hat eine hexagonale Form und eine Tiefe von 0.5mm ∼ 1.0mm.

2. Das reibschlüssige gewinkelte Dentalimplantat nach Anspruch 1, wobei der gekreuzte Winkel (α1, α2, α3) 1°∼ 30° ist.

3. Das reibschlüssige gewinkelte Dentalimplantat nach Anspruch 1, wobei das Durchgangsloch (133) eine Öffnung auf der oberen Seite davon aufweist, die Öffnung im Zentrum der Fläche des oberen Endes des Abutment-Verbindungsteils (131) platziert ist.

4. Das reibschlüssige gewinkelte Dentalimplantat nach Anspruch 1, wobei das Durchgangsloch (333) eine Öffnung auf der oberen Seite davon aufweist, die Öffnung an der Grenze der Fläche des oberen Endes des Abutment-Verbindungsteils (331) platziert ist.

5. Das reibschlüssige gewinkelte Dentalimplantat nach Anspruch 1, wobei das Durchgangsloch (233) eine Öffnung auf der oberen Seite davon aufweist, die Öffnung an der Seitenfläche des oberen Endteils des Abutment-Verbindungsteils (231) und der zentralen Achse (I-I) des gepflanzten Teils (210) platziert ist.

6. Das reibschlüssige gewinkelte Dentalimplantat nach Anspruch 3, wobei das Abutment-Verbindungsteil (431) in Bezug auf das gewinkelte Teil (432) zur Seite geschoben ist und das Durchgangsloch (433) eine Öffnung auf der oberen Seite davon aufweist, die Öffnung an der Fläche des oberen Endes des Abutment-Verbindungsteils (430) und der zentralen Achse (I-I) des gepflanzten Teils (210) platziert ist.

7. Ein reibschlüssiges gewinkeltes Dentalimplantat (500) umfassend:
ein gepflanztes Teil (510) das in einem Alveolarknochen (1) fest eingepflanzt ist,
ein nicht-gepflanztes Teil (530) mit der Höhe (h) entsprechend der Dicke von Gummi (2) und bereitgestellt mit einem Abutment-Verbindungsteil (531) auf dem oberen Teil davon, das Abutment-Verbindungsteil (531) ist reibschlüssig mit einem Abutment verbunden, wobei
die zentrale Achse (I-I) des gepflanzten Teils (510) und die zentrale Achse (II-II) des nicht-gepflanzten Teils (530) sich gegenseitig kreuzen, um einen gekreuzten Winkel (α1) zu bilden, das nicht-gepflanzte Teil (530) wird integral mit einem eingesetzten Befestigungsteil (533) an dem unteren Ende davon gebildet, um an der zentralen Achse (I-I) des gepflanzten Teils zu sein, das eingesetzte Befestigungsteil (533) wird mit dem gepflanzten Teil (510) darin eingesetzt, und weiter bereitgestellt mit einem gewinkelten Teil (532), um das Abutment-Verbindungsteil (531) mit dem eingesetzten Befestigungsteil (533) zu verbinden, und der gewinkelte Teil ist gewinkelt, um dem gekreuzten Winkel (α1) zu entsprechen,
**dadurch gekennzeichnet, dass**
das Abutment-Verbindungsteil (531) konisch ist, um von seinem unteren Ende bis zu seinem oberen Ende schmaler zu sein, der konische Winkel (β) ist 1°∼ 4° in Bezug auf die zentrale Achse davon;
das nicht-gepflanzte Teil (530) wird mit einer Positionsführungsaussparung (536) an dem oberen Endteil davon gebildet, die Positionsführungsaussparung (536) ist verbunden mit dem unteren Endteil des Abutments, das eingeführt werden soll, und die Positionsführungsaussparung hat eine hexagonale Form und eine Tiefe von 0.5mm ∼ 1.0mm.

8. Das reibschlüssige gewinkelte Dentalimplantat nach Anspruch 7, wobei der gekreuzte Winkel 1°∼ 30° ist.

9. Ein reibschlüssiges gewinkeltes Dentalimplantat (600, 700, 800, 900) umfassend:
ein gepflanztes Teil (610, 710, 810, 910) das in einem Alveolarknochen (1) fest eingepflanzt ist,
ein nicht-gepflanztes Teil (630, 730, 830, 930) mit der Höhe (h) entsprechend der Dicke von Gummi (2), integral auf dem oberen Ende des gepflanzten Teils gebildet, und bereitgestellt mit einem Abutment-Verbindungsteil (631) auf dem oberen Teil davon, das Abutment-Verbindungsteil (631) ist reibschlüssig mit einem Abutment verbunden; und weiter bereitgestellt mit einem Hals-Teil (633, 733, 833, 933) und einem gewinkelten Teil (632, 732, 832, 932), das Hals-Teil (633, 733, 833, 933) ist an das gepflanzte Teil (610, 710, 810, 910) gebunden, der gewinkelte Teil (632, 732, 832, 932) verbindet das Abutment-Verbindungsteil (631, 731, 831, 931) an das Hals-Teil (633, 733, 833, 933), um dem gekreuzten Winkel (α1, α2, α3) zu entsprechen, wobei
die zentrale Achse (I-I) des gepflanzten Teils (610, 710, 810, 910) und die zentrale Achse (II-II) des nicht-gepflanzten Teils (630) sich gegenseitig kreuzen, um einen gekreuzten Winkel (α1, α2, α3) zu bilden, und das nicht-gepflanzte Teil (630, 730, 830, 930) wird mit einer Pflanzwerkzeug-Einsetz-Aussparung (634, 734, 834, 934) an der zentralen Achse des gepflanzten Teils (610, 710, 810, 910) gebildet,
**dadurch gekennzeichnet, dass**
das Abutment-Verbindungsteil (631, 731, 831, 931) konisch ist, um von seinem unteren Ende bis zu seinem oberen Ende schmaler zu sein, der konische Winkel (β) ist 1°∼ 4° in Bezug auf die zentrale Achse davon;
das nicht-gepflanzte Teil (630, 730, 830, 930) wird mit einer Positionsführungsaussparung (636) an dem oberen Endteil davon gebildet, die Positionsführungsaussparung (636) ist verbunden mit dem unteren Endteil des Abutments, das eingeführt werden soll, die Positionsführungsaussparung hat eine hexagonale Form und eine Tiefe von 0.5mm ∼ 1.0mm.

10. Das reibschlüssige gewinkelte Dentalimplantat (600, 700, 800, 900) nach Anspruch 9, wobei der gekreuzte Winkel (α1, α2, α3) 1°∼ 30° ist.

11. Das reibschlüssige gewinkelte Dentalimplantat (600) nach Anspruch 9, wobei die Pflanzwerkzeug-Einsetz-Aussparung (634) eine Öffnung aufweist, die im Zentrum der Fläche des oberen Endes des Abutment-Verbindungsteils (631) platziert ist.

12. Das reibschlüssige gewinkelte Dentalimplantat (800) nach Anspruch 9, wobei die Pflanzwerkzeug-Einsetz-Aussparung (834) eine Öffnung aufweist, die an der Grenze der Fläche des oberen Endes des Abutment-Verbindungsteils (831) platziert ist.

13. Das reibschlüssige gewinkelte Dentalimplantat (700) nach Anspruch 9, wobei die Pflanzwerkzeug-Einsetz-Aussparung (734) eine Öffnung auf der Seitenfläche des oberen Endteils des Abutment-Verbindungsteils (731) aufweist.

14. Das reibschlüssige gewinkelte Dentalimplantat (900) nach Anspruch 9, wobei das Abutment-Verbindungsteil (931) in Bezug auf den gewinkelten Teil (932) zur Seite geschoben ist, und die Pflanzwerkzeug-Einsetz-Aussparung (934) eine Öffnung aufweist, die auf der Fläche des oberen Endes des Abutment-Verbindungsteils (931) platziert ist.

15. Das reibschlüssige gewinkelte Dentalimplantat (100, 200, 300, 400, 500, 600, 700, 800, 900) nach einem der Ansprüche 1-14, wobei der konische Winkel (β) 2°∼ 3° ist.

16. Das reibschlüssige gewinkelte Dentalimplantat (100, 200, 300, 400, 500, 600, 700, 800, 900) nach einem der Ansprüche 1-14, wobei die Höhe (h) des Abutment-Verbindungsteils (131, 231, 331, 431, 531, 631, 731, 831, 931) von seinem unteren Ende bis zu seinem oberen Ende 1mm ∼ 5mm ist.

17. Das reibschlüssige gewinkelte Dentalimplantat (100, 200, 300, 400, 500, 600, 700, 800, 900) nach Anspruch 16, wobei die Höhe (h) 2mm ∼ 4mm ist.

18. Das reibschlüssige gewinkelte Dentalimplantat (100, 200, 300, 400, 500, 600, 700, 800, 900) nach einem der Ansprüche 1-14, wobei der Durchmesser des unteren Endes des Abutment-Verbindungsteils (131, 231, 331, 431, 531, 631, 731, 831, 931) 2mm ∼ 6mm ist.

19. Das reibschlüssige gewinkelte Dentalimplantat (100, 200, 300, 400, 500, 600, 700, 800, 900) nach Anspruch 18, wobei der Durchmesser des unteren Endes des Abutment-Verbindungsteils (131, 231, 331, 431, 531, 631, 731, 831, 931) 3mm ∼ 5mm ist.

## Revendications

1. Un implant dentaire coudé à friction (100, 200, 300, 400) comprenant :
une partie implantée (110, 210, 310, 410) de manière fixe dans l'os alvéolaire (1) ;
une partie non implantée (130, 230, 330, 430) dont la hauteur (h) correspond à l'épaisseur de la gencive (2), cette partie disposant d'une partie de connexion à culée (131, 231, 331, 431) sur sa partie supérieure, cette partie de connexion à culée (131, 231, 331, 431) étant connectée par friction par le biais d'une culée ; et
une partie de fixation (150, 250, 350, 450) permettant une fixation définitive de la partie non implantée (130, 230, 330, 430) sur l'extrémité supérieure de la partie implantée (110, 210, 310, 410), où l'axe central (I-I) de la partie implantée (110, 210, 310, 410) et l'axe central (II-II) de la partie non implantée (130, 230, 330, 430) se croisent selon un angle (α1, α2, α3), et
la partie non implantée (130, 230, 330, 430) présente un alésage traversant (133, 233, 333, 433) sur l'axe central de la partie implantée, cet alésage traversant étant inséré sur la partie de fixation ; ladite partie non implantée dispose également d'une partie coudée (132, 232, 332, 432) à fixer sur la partie implantée, l'angle de cette partie coudée correspondant à l'angle de croisement (α1, α2, α3),
**caractérisé par le fait que**
la partie de connexion à culée (131, 231, 331, 431) est fuselée pour être plus fine à son extrémité supérieure par rapport à son extrémité inférieure, l'angle de fuselage (β) étant de 1° à 4° par rapport à l'axe central de cette partie ;
la partie non implantée (130) dispose d'un renfoncement servant de guide (136) sur sa partie supérieure, le renfoncement de guidage (136) est de forme hexagonale et d'une profondeur de 0,5 à 1,0 mm, il doit être connecté à la partie inférieure de la culée à insérer.

2. L'implant dentaire coudé à friction selon la revendication 1, où l'angle de croisement (α1, α2, α3) est de 1° à 30°.

3. L'implant dentaire coudé à friction selon la revendication 1, où l'alésage traversant (133) présente une ouverture sur la partie supérieure, cette ouverture se situant au centre de la surface supérieure de la partie de connexion à culée (131).

4. L'implant dentaire coudé à friction selon la revendication 1, où l'alésage traversant (333) présente une ouverture sur la partie supérieure, cette ouverture se situant sur le bord de la surface supérieure de la partie de connexion à culée (331).

5. L'implant dentaire coudé à friction selon la revendication 1, où l'alésage traversant (233) présente une ouverture sur la partie supérieure, cette ouverture se situant sur la surface latérale de la partie supérieure de la partie de connexion à culée (231) et sur l'axe central (I-I) de la partie implantée (210).

6. L'implant dentaire coudé à friction selon la revendication 3, où la partie de connexion à culée (431) est décalée par rapport à la partie coudée (432) et l'alésage traversant (433) présente une ouverture sur son côté supérieur, cette ouverture étant située sur la surface supérieure de la partie de connexion à culée (430) et sur l'axe central (I-I) de la partie implantée (410).

7. Un implant dentaire coudé à friction (500) comprenant :
une partie implantée (510) de manière fixe dans l'os alvéolaire (1) ; et
une partie non implantée (530) dont la hauteur (h) correspond à l'épaisseur de la gencive (2), cette partie disposant d'une partie de connexion à culée (531) sur sa partie supérieure, cette partie de connexion à culée (531) étant connectée par friction par le biais d'une culée ; où
l'axe central (I-I) de la partie implantée (510) et l'axe central (II-II) de la partie non implantée (530) se croisent selon un angle (α1) ; la partie non implantée (530) comprend une partie de fixation à insérer solidaire (533) sur sa partie inférieure selon l'axe central (I-I) de la partie implantée (510), la partie de fixation à insérer (533) devant être insérée dans la partie implantée (510) ; et une partie coudée (532) est également présente pour connecter la partie de connexion à culée (531) à la partie de fixation à insérer (533), l'angle de cette partie coudée correspondant à l'angle de croisement (α1),
**caractérisé par le fait que**
la partie de connexion à culée (531) est fuselée pour être plus fine à son extrémité supérieure par rapport à son extrémité inférieure, l'angle de fuselage (β) étant de 1° à 4° par rapport à l'axe central de cette partie ;
la partie non implantée (530) dispose d'un renfoncement servant de guide (536) sur sa partie supérieure, le renfoncement de guidage est de forme hexagonale et d'une profondeur de 0,5 à 1,0 mm, il doit être connecté à la partie inférieure de la culée à insérer.

8. L'implant dentaire coudé à friction selon la revendication 7, où l'angle de croisement est de 1° à 30°.

9. Un implant dentaire coudé à friction (600, 700, 800, 900) comprenant :
une partie implantée (610, 710, 810, 910) de manière fixe dans l'os alvéolaire (1) ; et
une partie non implantée (630, 730, 830, 930) dont la hauteur (h) correspond à l'épaisseur de la gencive (2), solidaire au niveau de l'extrémité supérieure de la partie implantée, présentant une partie de connexion à culée (631) sur sa partie supérieure, cette partie de connexion à culée (631) étant connectée par friction à la culée, également équipée d'un col (633, 733, 833, 933) et d'une partie coudée (632, 732, 832, 932), le col (633, 733, 833, 933) étant connecté à la partie implantée (610, 710, 810, 910) ; la partie coudée (632, 732, 832, 932) connectant la partie de connexion à culée (631, 731, 831, 931) au col (633, 733, 833, 933) doit correspondre à l'angle de croisement (α1, α2, α3), où
l'axe central (I-I) de la partie implantée (610, 710, 810, 910) et l'axe central (II-II) de la partie non implantée (630) se croisent selon un angle (α1, α2, α3) et la partie non implantée (630, 730, 830, 930) présente un renfoncement pour l'outil d'implantation (634, 734, 834, 934) selon l'axe central (I-I) de la partie implantée (610, 710, 810, 910),
**caractérisé par le fait que**
la partie de connexion à culée (631, 731, 831, 931) est fuselée pour être plus fine à son extrémité supérieure par rapport à son extrémité inférieure, l'angle de fuselage (β) étant de 1° à 4° par rapport à l'axe central de cette partie ;
la partie non implantée (630, 730, 830, 930) dispose d'un renfoncement servant de guide (636) sur sa partie supérieure, le renfoncement de quidage (636) est de forme hexagonale et d'une profondeur de 0,5 à 1,0 mm, il doit être connecté à la partie inférieure de la culée à insérer.

10. L'implant dentaire coudé à friction (600, 700, 800, 900) selon la revendication 9, où l'angle de croisement (α1, α2, α3) est de 1° à 30°.

11. L'implant dentaire coudé à friction (600) selon la revendication 9, où l'ouverture du renfoncement pour outil d'implantation (634) est située au centre de la surface supérieure de la partie de connexion à culée (631).

12. L'implant dentaire coudé à friction (800) selon la revendication 9, où l'ouverture du renfoncement pour outil d'implantation (834) est située au bord de la surface supérieure de la partie de connexion à culée (831).

13. L'implant dentaire coudé à friction (700) selon la revendication 9, où l'ouverture du renfoncement pour outil d'implantation (734) est située su le côté de la partie supérieure de la partie de connexion à culée (731).

14. L'implant dentaire coudé à friction (900) selon la revendication 9, où la partie de connexion à culée (931) est décalée par rapport à la portion coudée (932) et l'ouverture du renfoncement pour outil d'implantation (934) est située sur la surface supérieure de la partie de connexion à culée (931).

15. L'implant dentaire coudé à friction (100, 200, 300, 400, 500, 600, 700, 800, 900) selon l'une des revendications 1 à 14, où l'angle de fuselage (β) est de 2° à 3°.

16. L'implant dentaire coudé à friction (100, 200, 300, 400, 500, 600, 700, 800, 900) selon l'une des revendications 1 à 14, où la hauteur (h) de la partie de connexion à culée (131, 231, 331, 431, 531, 631, 731, 831, 931) entre ses extrémités supérieure et inférieure est de 1 mm à 5 mm.

17. L'implant dentaire coudé à friction (100, 200, 300, 400, 500, 600, 700, 800, 900) selon la revendication 16, où la hauteur (h) est de 2 mm à 4 mm.

18. L'implant dentaire coudé à friction (100, 200, 300, 400, 500, 600, 700, 800, 900) selon l'une des revendications 1 à 14, où le diamètre de l'extrémité inférieure de la partie de connexion à culée (131, 231, 331, 431, 531, 631, 731, 831, 931) est de 2 mm à 6 mm.

19. L'implant dentaire coudé à friction (100, 200, 300, 400, 500, 600, 700, 800, 900) selon la revendication 18, où le diamètre de l'extrémité inférieure de la partie de connexion à culée (131, 231, 331, 431, 531, 631, 731, 831, 931) est de 3 mm à 5 mm.
